# EUROPÄISCHE PATENTSCHRIFT

(11) **EP 3 542 237 B1**
(45) Veröffentlichungstag und Bekanntmachung des Hinweises auf die Patenterteilung: **07.10.2020**
(21) Anmeldenummer: 17798185.9
(22) Anmeldetag: 10.11.2017
(51) Int. Cl.: B62D 15/02, B60W 10/04, B60W 10/184, B60W 10/20, B60W 30/09, B60W 30/095, B60W 30/12, B60W 30/18, B60W 50/00, G05D 1/02

(54) **AUTONOMES STEUERN EINES KRAFTFAHRZEUGS ANHAND VON SPURDATEN; KRAFTFAHRZEUG**
AUTONOMOUS CONTROL OF A MOTOR VEHICLE ON THE BASIS OF LANE DATA; MOTOR VEHICLE
COMMANDE AUTONOME D'UN VÉHICULE AUTOMOBILE À PARTIR DE DONNÉES DE VOIE; VÉHICULE AUTOMOBILE

(30) Priorität: 18.11.2016 DE 102016222782
(43) Veröffentlichungstag der Anmeldung: 25.09.2019
(73) Patentinhaber: AUDI AG, 85045 Ingolstadt (DE)
(72) Erfinder: ROTTKAMP, Lukas, 85049 Ingolstadt (DE)
(86) Internationale Anmeldenummer: PCT/EP2017/078914
(87) Internationale Veröffentlichungsnummer: WO 2018/091373

(56) Entgegenhaltungen:
- WO-A1-2016/126321
- DE-A1-102014 213 171
- DE-C1- 19 525 291

## Beschreibung

Die Erfindung betrifft ein Verfahren zum autonomen Führen eines Kraftfahrzeugs, wobei ein Kraftfahrzeug anhand einer Trajektorie autonom entlang einer zu befahrende in Route gesteuert wird.

Es ist aus dem Stand der Technik bekannt, dass Kraftfahrzeuge autonom bewegt werden können. Hierzu wird beispielsweise eine Umgebung des Kraftfahrzeugs durch zumindest eine Erfassungseinrichtung, beispielsweise einen Lidar-Sensor, eine Kamera, insbesondere Monokamera oder Stereo-kamera, einen Ultraschallsensor oder einen Radarsensor, erfasst. Es können Fahrbahnmarkierungen sowie andere Verkehrsteilnehmer, beispielsweise andere Kraftfahrzeuge, Fahrradfahrer oder Fußgänger, sowie Hindernisse erfasst werden. Anhand von derart erfassten Umgebungsdaten kann eine Trajektorie zum autonomen Bewegen des Kraftfahrzeugs berechnet werden. Durch eine begrenzte Reichweite beziehungsweise Erfassungsreichweite der Erfassungseinrichtung ist ein vorausschauende Planen der Trajektorie nur eingeschränkt möglich.

Das Dokument WO 2016/126321 A1 offenbart einen relevanten Stand der Technik. In diesem Dokument wird die Steuerung eines autonomen Fahrzeugs unter verschiedenen Umständen offenbart, wie beispielsweise die Anpassung der Steuerstrategien des Fahrzeugs auf der Grundlage von Diskrepanzen zwischen Kartendaten und vom Fahrzeug erhaltenen Sensordaten.

Es ist Aufgabe der vorliegenden Erfindung ein vorausschauendes Planen einer Trajektorie zum Führen eines Kraftfahrzeugs zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Im Rahmen des erfindungsgemäßen Verfahrens zum autonomen Führen eines Kraftfahrzeugs wird zunächst eine Referenztrajektorie für eine durch das Kraftfahrzeug zu befahrende Route empfangen. Die Referenztrajektorie kann durch eine Empfangseinrichtung des Kraftfahrzeugs empfangen werden. Insbesondere wird die Referenztrajektorie aus einer fahrzeuginternen Recheneinheit und/oder von einer fahrzeugexternen Recheneinheit, beispielsweise einer Servereinrichtung oder einer Cloud, empfangen. Durch die Referenztrajektorie kann eine durchgängige Bewegungsbahn beziehungsweise ein durchgängiger Bewegungsverlauf für eine durchgängige Abfolge von Fahrmanövern, insbesondere Lenkmanövern und/oder Beschleunigungsmanövern und/oder Bremsmanövern, festgelegt oder vorfestgelegt sein. Beispielweise wird die durchgängige Abfolge von Fahrmanövern anhand der Referenztrajektorie berechnet. Insbesondere kann durch die Referenztrajektorie eine Bewegung des Kraftfahrzeugs eindeutig festgelegt oder vorfestgelegt sein. Es geht aber nicht um Navigationsangaben (z.B. "nächste Querstraße rechts abbiegen"). Demnach kann es möglich sein, das Kraftfahrzeug allein anhand der Referenztrajektorie autonom zu führen.

Die Referenztrajektorie kann eine Beschreibung des, insbesondere präferierten, Bewegungsverlaufes sein. Insbesondere kann so ein Bewegungsverlauf durch eine Abfolge von Positionen, beispielsweise Geokoordinaten (Längen- und Breitengrad) oder Positionen eines anderen Koordinatensystems, zusammen mit Geschwindigkeitswerten (an den Positionen) beschrieben werden. Die Fahrmanöver, insbesondere Lenkmanöver, Beschleunigungsmanöver und Bremsmanöver, werden beispielsweise erst im Kraftfahrzeug berechnet.

Diese Referenztrajektorie wird aber bevorzugt zunächst überprüft. Aus einer Erfassungseinrichtung des Kraftfahrzeugs werden Umgebungsdaten erfasst. Die Umgebungsdaten betreffen eine Umgebung des Kraftfahrzeugs. Insbesondere wird als Teil der Umgebungsdaten eine Lage und/oder Position von Fahrbahnmarkierungen und/oder dynamischen fahrzeugexternen Objekten, beispielsweise weiteren Kraftfahrzeugen und Fußgängern, und/oder stationären fahrzeugexternen Objekten, beispielsweise Fahrbahnbegrenzungen, Leitplanken und Randsteinen, erfasst. Anhand der Umgebungsdaten kann eine Befahrbarkeit der Referenztrajektorie überprüft werden. Insbesondere wird überprüft, ob bei einem Folgen der Referenztrajektorie durch das Kraftfahrzeug eine Kollision erfolgen würde. Beispielsweise wird überprüft, ob sich ein fahrzeugexternes Objekt auf der Referenztrajektorie beziehungsweise in einem vordefinierten Bereich um die Referenztrajektorie befindet. Bevorzugt wird alternativ oder zusätzlich überprüft, ob sich ein fahrzeugexternes Objekt auf einem Kollisionskurs mit dem Kraftfahrzeug befindet, wenn dieses der Referenztrajektorie folgt. Vorzugsweise wird überprüft, ob das Kraftfahrzeug beim Folgen der Referenztrajektorie eine Fahrspur verlässt, beispielsweise durch überprüfen, ob das Kraftfahrzeug eine Fahrbahnmarkierungen überfährt. Im Allgemeinen kann die Befahrbarkeit erkannt werden, wenn die Referenztrajektorie und die Umgebungsdaten zusammen einem vorbestimmten Kriterium genügen. Das vorbestimmte Kriterium kann beispielsweise durch eine oder mehrere der oben genannten Bedingungen gegeben sein.

Durch Korrigieren der Referenztrajektorie anhand der Umgebungsdaten kann eine Fahrttrajektorie erzeugt werden. Genügt die Referenztrajektorie nicht dem vorbestimmten Kriterium, so wird insbesondere eine Fahrttrajektorie erzeugt, die dem vordefinierten Kriterium genügen. Befindet sich beispielsweise ein fahrzeugexternes Objekt auf der Referenztrajektorie beziehungsweise in dem vordefinierten Bereich um die Referenztrajektorie, so kann die Referenztrajektorie dahingehend korrigiert werden, dass die Fahrttrajektorie an diesem fahrzeugexternen Objekt, insbesondere in einem Abstand, der größer ist als ein vordefinierter Abstandsgrenzwert, vorbeiführt. Insbesondere werden durch das Korrigieren der Referenztrajektorie Änderungen an dieser vorgenommen. Vorzugsweise wird die Referenztrajektorie nur soweit korrigiert, wie dies zum Vermeiden einer Kollision notwendig ist. Beispielsweise wird der durch die Referenztrajektorie vorfestgelegte Bewegungsverlauf im Falle einer möglichen Kollision an die Umgebung des Kraftfahrzeugs angepasst. Das Kraftfahrzeug wird autonom entlang der Fahrttrajektorie geführt. Insbesondere wird das Kraftfahrzeug durch ein Steuergerät des Kraftfahrzeugs geführt. Da die Fahrttrajektorie vorzugsweise der Referenztrajektorie entspricht und insbesondere nur im Falle einer nicht Befahrbarkeit der Referenztrajektorie von dieser abweicht, kann das Kraftfahrzeug demnach im Wesentlichen entlang der Referenztrajektorie geführt werden. Das Führen umfasst die Längsführung und/oder Querführung des Kraftfahrzeugs.

Um nun das vorausschauende Planen einer Fahrttrajektorie zu ermöglichen, ist erfindungsgemäß vorgesehen, dass als die Referenztrajektorie eine solche verwendet wird, die unabhängig von den Umgebungsdaten auf der Grundlage von Spurdaten gebildet ist. Durch die Spurdaten ist insbesondere ein Fahrbahnverlauf beziehungsweise Straßenverlauf einer Straße, entlang welcher die Route führt, beschrieben. Bei den Spurdaten kann es sich um eine digitale Karte handeln, welche die Position der Fahrbahnmarkierungen und/oder der stationären fahrzeugexternen Objekte beinhaltet. Die Spurdaten können beziehungsweise die Karte kann eine Auflösung beziehungsweise Genauigkeit von mehr als 50cm, 20cm, 10 cm, 5cm, 2cm, 1cm aufweisen.

Mit anderen Worten kann die Referenztrajektorie zum Führen des Kraftfahrzeugs anhand der Spurdaten berechnet werden. Vorzugsweise wird die Referenztrajektorie unabhängig von den Umgebungsdaten auf der Grundlage von den Spurdaten, insbesondere durch die Recheneinheit, gebildet und/oder berechnet. Die Recheneinheit kann eine interne Recheneinheit des Kraftfahrzeugs sein oder durch eine fahrzeugexterne Servereinrichtung umfasst sein. Die Referenztrajektorie kann anschließend anhand der Umgebungsdaten auf ihre Befahrbarkeit hin überprüft werden. Die Referenztrajektorie kann vorberechnet werden, bevor sie unmittelbar zum Führen des Kraftfahrzeugs verwendet wird. Allgemein ist somit anhand der Spurdaten ein besonders vorrauschauendes Planen der Trajektorie möglich.

Mit anderen Worten kann der durch die Referenztrajektorie festgelegte beziehungsweise vorfestgelegte Bewegungsverlauf des Kraftfahrzeugs anders ausfallen, als durch die Referenztrajektorie beschrieben. Insbesondere kann der durch die Referenztrajektorie vorfestgelegte Bewegungsverlauf nachträglich anhand der Umgebungsdaten angepasst werden.

In weiterer Ausgestaltung der Erfindung geht die zu befahrene Route, für welche die Referenztrajektorie berechnet wird, über eine Reichweite der Erfassungseinrichtung hinaus. Mit anderen Worten kann die Referenztrajektorie zumindest teilweise für einen Bereich der Umgebung des Kraftfahrzeugs berechnet werden, welcher außerhalb der Reichweite der Erfassungseinrichtung liegt. Auf diese Weise kann der vorausschauende Charakter der Referenztrajektorie über die Erfassungseinrichtung hinaus reichen. Insbesondere kann bereits auf vorausliegende Begebenheiten der zu befahrene Route reagiert werden. Beispielsweise ist ein Ausrollen vor Ortschaften und/oder engen Kurven ermöglicht, wodurch auf Bremsmanöver verzichtet und der Kraftstoffverbrauch des Kraftfahrzeugs gesenkt werden kann.

Vorzugsweise wird die Referenztrajektorie von einer zentralen Servereinrichtung berechnet und durch das Kraftfahrzeug empfangen. Die zentrale Servereinrichtung kann die Recheneinheit zum Berechnen der Referenztrajektorie umfassen. Die Referenztrajektorie wird dann von der zentralen Servereinrichtung an das Kraftfahrzeug gesendet und/oder durch das Kraftfahrzeug, insbesondere durch die Empfangseinrichtung, erfasst. Die Servereinrichtung kann die Spurdaten aus einer Speichereinheit abrufen und/oder in der Speichereinheit speichern. Durch die zentrale Servereinrichtung kann im Vergleich einer fahrzeuginternen Recheneinheit eine besonders große Rechenleistung bereitgestellt werden. Außerdem kann die zentrale Servereinrichtung stets über aktuelle Spurdaten beziehungsweise hochgenaue Karten verfügen, ohne diese an das Kraftfahrzeug zu übertragen. Insbesondere wird durch das Kraftfahrzeug allein die Referenztrajektorie empfangen, wodurch eine zu empfangene Datenmenge auf ein Minimum reduziert werden kann. Mit anderen Worten kann die zentrale Servereinrichtung in einer Ausführungsform ausschließlich die Referenztrajektorie an das Kraftfahrzeug senden.

In einer Weiterbildung der Erfindung wird die Referenztrajektorie durch Simulation einer Fahrt entlang der Straße gebildet. Beispielsweise kann ein Komfortniveau anhand von auf einen insassenwirkenden Kräften simuliert werden und die Referenztrajektorie anhand des Simulationsergebnisses gebildet werden. Das Komfortniveau kann insbesondere durch den Insassen vor ausgewählt werden, wodurch der Insasse beispielsweise eine sportliche oder eine komfortable Fahrt wählen kann. Alternativ oder zusätzlich können Querkräfte auf das Kraftfahrzeug, insbesondere beim Durchfahren einer Kurve, ein Kraftstoffverbrauch und/oder beliebige andere Größen simuliert werden. Durch Simulation unterschiedlicher Fahrsituationen kann die Referenztrajektorie dann anhand der Simulation an gewünschte Bedingungen angepasst werden.

Eine Weiterbildung der Erfindung sieht vor, dass die Referenztrajektorie universell für mehrere Kraftfahrzeuge berechnet wird. Insbesondere können unterschiedliche Kraftfahrzeuge in Fahrzeugkategorien eingeteilt werden und für jede Fahrzeugkategorie zumindest eine Referenztrajektorie berechnet werden. Vorzugsweise werden gleichartige oder ähnliche Kraftfahrzeuge in dieselbe Fahrzeugkategorie eingeteilt. Insbesondere werden die Kraftfahrzeuge von der zentralen Servereinrichtung in die Fahrzeugkategorien eingeteilt. Alternativ oder zusätzlich wird die Referenztrajektorie durch die zentrale Servereinrichtung universell für die mehreren Kraftfahrzeuge beziehungsweise unterschiedlichen Fahrzeugkategorien berechnet. Es kann dann eine jeweilige Referenztrajektorie an eines oder mehrere der mehreren Kraftfahrzeuge gesendet werden. Durch jedes der mehreren Kraftfahrzeuge kann zumindest eine entsprechende Referenztrajektorie empfangen werden. Durch universelle Referenztrajektorien kann der Berechnungsaufwand gegenüber einer einzelnen Berechnung für jedes der mehreren Kraftfahrzeuge gesenkt werden.

In weiterer Ausgestaltung der Erfindung werden für die zu befahrene Route mehrere alternative Referenztrajektorien durch das Kraftfahrzeug empfangen und eine davon anhand der Umgebungsdaten und/oder Präferenzdaten eines Fahrzeuginsassen und/oder Modelldaten des Kraftfahrzeugs ausgewählt. Beispielsweise gibt der Fahrzeuginsasse Präferenzdaten vor, welche beschreiben, ob der Fahrzeuginsasse eine sportliche oder komfortable Fahrt wünscht. Davon abhängig kann aus den mehreren alternativen Referenztrajektorien eine komfortable Referenztrajektorie oder eine komfortable Referenztrajektorie ausgewählt werden. Die sportliche Referenztrajektorie bringt beispielsweise höhere Kurvengeschwindigkeiten, stärkere Bremsmanövern und stärkere Beschleunigungsmanöver als die komfortable Referenztrajektorie mit sich. Alternativ oder zusätzlich kann eine der mehreren alternativen Referenztrajektorien anhand der Modelldaten des Kraftfahrzeugs, beispielsweise eine Leistungsfähigkeit eines Antriebs des Kraftfahrzeugs, einem verbauten Fahrwerk oder verbaute Sonderausstattung, ausgewählt werden. Insbesondere wird anhand der Modelldaten die komfortable oder die sportliche Referenztrajektorie ausgewählt. Die mehreren alternativen Referenztrajektorien können in einem anderen Beispiel eine Fahrt entlang mehrerer Fahrspuren einer Fahrbahn beschreiben. Beispielsweise wird für jede Fahrspur einer mehrspurigen Autobahn eine jeweilige Referenztrajektorie durch das Kraftfahrzeug empfangen. Eine der jeweiligen Referenztrajektorien kann dann anhand der Umgebungsdaten, beispielsweise einem Verkehrsaufkommen auf den unterschiedlichen Fahrspuren und einer Position des Kraftfahrzeugs, ausgewählt werden.

Eine Ausgestaltung der Erfindung sieht vor, dass die Referenztrajektorie zumindest teilweise durch eine Abfolge von Koordinatenangaben beschrieben wird. Somit ist die Referenztrajektorie durch eine Vielzahl von Positionen beschrieben. Die Koordinatenangaben beziehungsweise Positionen können einem konstanten, vordefinierten oder in einem unterschiedlichen Abstand voneinander folgen. Beispielsweise befinden sich die Koordinaten beziehungsweise Positionen in einem Abstand von 5 cm, 10 cm, 20 cm, 30cm, 50 cm oder 100cm voneinander. Zwischenräume zwischen den Positionen beziehungsweise zwischen den Koordinatenangaben können durch Interpolation, beispielsweise durch einen zu klein, ab maximiert werden. Beispielsweise wird das Kraftfahrzeug, insbesondere wenn keine Korrektur der Referenztrajektorie nötig ist, durch abfahren der Abfolge von Koordinatenangaben autonom geführt. Zusätzlich können die Koordinatenangaben durch Zeitangaben und/oder Geschwindigkeitsangaben und/oder Beschleunigungsangaben ergänzt werden. Auf diese Weise kann die Geschwindigkeit des Kraftfahrzeugs in jedem Punkt der Referenztrajektorie festgelegt sein.

Alternativ oder zusätzlich kann die Referenztrajektorie zumindest teilweise durch Angaben zu Landschaftsmarken beschrieben werden, welche anhand der Umgebungsdaten erfasst werden. Beispiele für Landschaftsmarken können Bäume, Brücken, Brückenpfeiler, eine Leitplanke oder Fahrbahnmarkierung, ein Kreisverkehr eine Kreuzung und/oder ein Fußweg sein. Jegliche Objekte oder Eigenheiten der Umgebung des Kraftfahrzeugs können als Landschaftsmarken herangezogen werden. Vorzugsweise sind Landschaftsmarken unveränderliche Objekte oder Besonderheiten. Die Referenztrajektorie kann dann durch relative Koordinaten zu der Landschaftsmarken beziehungsweise zu den Landschaftsmarken festgelegt sein. Dadurch kann eine hochgenaue GPS Lokalisation des Kraftfahrzeugs ersetzt oder ergänzt werden.

Eine Weiterbildung sieht vor, dass als die Referenztrajektorie eine solche verwendet wird, die durch einen Testfahrer validiert ist. Insbesondere kann die zentrale Servereinrichtung die Referenztrajektorie mittels des Testfahrers validieren. Der Testfahrer kann ein Fahrer eines speziellen Testfahrzeugs sein, welches insbesondere zum Testen der Referenztrajektorie auf der Straße fährt. Alternativ kann der Testfahrer der Fahrer eines weiteren Kraftfahrzeug sein, welches auf der Straße fährt und mit der Servereinrichtung und/oder dem Kraftfahrzeug in Kontakt steht. Insbesondere wird als Testfahrer ein solcher Fahrer ausgewählt, der die durch das Kraftfahrzeug zu befahrende Route vor kurzer Zeit ebenfalls befahren hat. Insbesondere wird die durch das Kraftfahrzeug zu befahrene Route durch den Testfahrer mittels der Referenztrajektorie befahren. Auf diese Weise kann eine besonders hohe Sicherheit der Referenztrajektorie gewährleistet werden.

Ein zweiter Aspekt der Erfindung betrifft ein Kraftfahrzeug mit einer Steuereinrichtung zum autonomen Führen eines Kraftfahrzeugs. Das Kraftfahrzeug umfasst eine Empfangseinrichtung zum Empfangen einer Referenztrajektorie. Durch die Referenztrajektorie kann eine durchgängige Abfolge von Fahrmanövern, insbesondere Lenkmanövern und/oder Beschleunigungsmanövern und/oder Bremsmanövern, festgelegt oder vorfestgelegt sein. Beispielsweise kann die durchgängige Abfolge von Fahrmanövern oder die durchgängige Abfolge von Fahrmanövern allein anhand von der Referenztrajektorie festgelegt oder vorfestgelegt sein. Beispielweise ist eine Fahrzeugeinrichtung dazu ausgebildet, die durchgängige Abfolge von Fahrmanövern anhand der Referenztrajektorie zu berechnen. Insbesondere kann durch die Referenztrajektorie ein Bewegungsverlauf des Kraftfahrzeugs eindeutig festgelegt oder vorfestgelegt sein. Eine Erfassungseinrichtung ist zum Erfassen von Umgebungsdaten einer Umgebung des Kraftfahrzeugs ausgebildet. Das Kraftfahrzeug kann außerdem eine Validierungseinrichtung zum Überprüfen einer Befahrbarkeit der Referenztrajektorie anhand der Umgebungsdaten sowie zum Erzeugen einer Fahrttrajektorie durch Korrigieren der Referenztrajektorie anhand der Umgebungsdaten umfassen. Ein Steuergerät ist zum autonomen Führen des Kraftfahrzeugs entlang der Fahrttrajektorie ausgebildet. Beispielweise ist das Steuergerät dazu ausgebildet, eine weitere durchgängige Abfolge von Fahrmanövern anhand der Fahrttrajektorie zu berechnen.

Zur Lösung der erfindungsgemäßen Aufgabe ist die Empfangseinrichtung zum Empfang einer solchen Referenztrajektorie ausgebildet, die unabhängig von den Umgebungsdaten auf der Grundlage von Spurdaten, durch welche ein Fahrbahnverlauf einer Straße, entlang welcher die Route führt, beschrieben ist, ausgebildet ist. Beispielsweise ist die Empfangseinrichtung zum Empfang der Referenztrajektorie von einer Recheneinheit ausgebildet. Die Recheneinheit kann durch das Kraftfahrzeug umfasst sein oder Teil einer zentralen Servereinrichtung sein. Insbesondere ist die Recheneinheit dazu ausgebildet, die Referenztrajektorie unabhängig von den Umgebungsdaten auf der Grundlage von den Spurdaten zu bilden und/oder zu berechnen.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Im Folgenden ist ein Ausführungsbeispiel der Erfindung beschrieben. Hierzu zeigt:
Fig. 1 in einer schematischen Ansicht ein Kraftfahrzeug sowie eine zentrale Servereinrichtung; und
Fig. 2 anhand einer schematischen Übersicht über eine Referenztrajektorie und eine Fahrtrajektorie eine Ausführungsform des vorliegenden Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

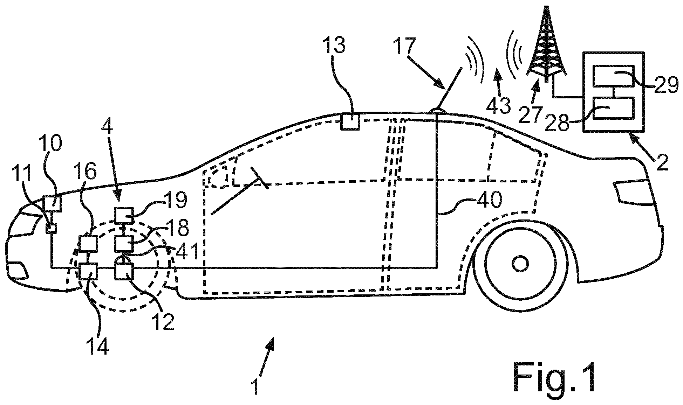

Die Fig. 1 zeigten schematischen Seitenansicht ein Kraftfahrzeug 1 mit einer Steuereinrichtung, die zum autonomen Führen des Kraftfahrzeugs 1 ausgebildet ist. Die Steuereinrichtung 4 umfasst vorliegend eine Empfangseinrichtung 12, eine Erfassungseinrichtung 10 eine Validierungseinrichtung 14 sowie ein Steuergerät 16. Die Steuereinrichtung 4 kann zusätzlich oder alternativ eine Recheneinheit 18 und/oder eine Speichereinheit 19 umfassen. Außerdem umfasst das Kraftfahrzeug 1 vorliegend eine Antenneneinrichtung 17, die zum Aufbau einer drahtlosen Datenverbindung 43 ausgebildet ist und mit der Empfangseinrichtung 12 durch eine Datenverbindung 40 verbunden ist.

Fig. 1 zeigt außerdem eine zentrale Servereinrichtung 2, welche eine Recheneinheit 28 sowie eine Speichereinheit 29 umfasst. Zur Kommunikation mit dem Kraftfahrzeug 1 und/oder der Antenneneinrichtung 17 beziehungsweise der Empfangseinrichtung 12 ist die zentrale Servereinrichtung 2 vorliegend mit einem Sendemasten 27, insbesondere über eine Datenleitung, verbunden.

Ist im Folgenden von der Speichereinheit 19, 29 beziehungsweise der Recheneinheit 18, 28 geschrieben, so ist entweder eine der Speichereinheiten 19, 29 beziehungsweise eine der Recheneinheiten 18, 28 oder beide der Speichereinheiten 19, 29 beziehungsweise beide der Recheneinheiten 18, 28 gemeint.

Die Empfangseinrichtung 12 empfängt eine Referenztrajektorie 31 zum autonomen Steuern des Kraftfahrzeugs 1. Durch die Referenztrajektorie 31 kann eine durchgängige Abfolge von Fahrmanövern, insbesondere Lenkmanövern und/oder Beschleunigungsmanövern und/oder Bremsmanövern, festgelegt oder vorfestgelegt sein. Beispielsweise ist durch die Referenztrajektorie die durchgängige Abfolge von Fahrmanövern festgelegt. Beispielweise wird die durchgängige Abfolge von Fahrmanövern anhand der Referenztrajektorie 31 berechnet. Insbesondere kann durch die Referenztrajektorie 31 eine Bewegung des Kraftfahrzeugs 1 eindeutig festgelegt oder vorfestgelegt sein. Insbesondere beschreibt die Referenztrajektorie 31 eine Fahrt des Kraftfahrzeugs 1 auf einer durch das Kraftfahrzeug 1 zu befahrende in Route 30. Insbesondere ist die Fahrt des Kraftfahrzeugs 1 auf der Route 30 durch die Referenztrajektorie 31 im Wesentlichen oder vollständig festgelegt. Insbesondere ist ein Steuern des Kraftfahrzeugs 1 allein anhand der Referenztrajektorie 31 ermöglicht. Insbesondere kann durch die Referenztrajektorie 31 eine optimale Fahrt des Kraftfahrzeugs 1 entlang einer Straße 35 beschrieben sein. Die Referenztrajektorie 31 kann allein von einem Straßenverlauf der Straße 35 abhängig sein. Insbesondere hat eine Verkehrssituation auf der Straße 35, beispielsweise gegeben durch ein weiteres Kraftfahrzeug 3, Fußgänger, Radfahrer und/oder mobile Hindernisse auf der Straße 35, keinen Einfluss auf die Referenztrajektorie 31 beziehungsweise das Bilden der Referenztrajektorie 31.

Die Referenztrajektorie 31 kann anhand von Spurdaten 38 gebildet sein. Die Spurdaten 38 können insbesondere den Straßenverlauf der Straße 35 und/oder den Spurverlauf einer oder mehrerer Fahrspuren 36, 37 der Straße 35 beschreiben. Vorzugsweise beschreiben die Spurdaten 38 den Spurverlauf beziehungsweise Straßenverlauf mit einer hohen Genauigkeit besser als 1 cm, 2 cm, 5 cm, 10 cm, 20 cm, 30 cm, 50 cm. Beispielsweise ist der Spurverlauf beziehungsweise Straßenverlauf durch die Position und die Orientierung und die Art von Fahrbahnbegrenzungen 42, beispielsweise Leitplanken oder Fahrbahnmarkierungen, beschrieben. Die Spurdaten 38 können Teil einer Karte sein und/oder durch eine Karte bereitgestellt sein und/oder aus einer Karte extrahiert werden. Bei der Karte kann es sich um eine hochgenaue Karte handeln, welche die Straße 35 beziehungsweise die Fahrspuren 36, 37 mit der für die Spurdaten 38 nötigen Genauigkeit, insbesondere wie oben angegeben, beschreibt beziehungsweise darstellt.

Die Referenztrajektorie 31 kann insbesondere von der Recheneinheit 18 des Kraftfahrzeugs 1 und/oder der Recheneinheit 28 der zentralen Servereinrichtung 2 empfangen werden. Insbesondere sendet beziehungsweise übermittelt die Recheneinheit 18 die Referenztrajektorie 31 mittels einer Datenverbindung 41 an die Empfangseinrichtung 12. Die Recheneinheit 28 der zentralen Servereinrichtung 2 beziehungsweise die zentrale Servereinrichtung 2 kann die Referenztrajektorie 31 an die Empfangseinrichtung 12 des Kraftfahrzeugs senden beziehungsweise übermitteln. Insbesondere wird die Referenztrajektorie 31 von der zentralen Servereinrichtung 2 mittels der drahtlosen Datenverbindung 43, beispielsweise über Wi-Fi oder das Handynetz, mittels dem Sendemast 27 und der Antenneneinrichtung 17 an die Empfangseinrichtung 12 übermittelt.

Die Spurdaten 38 beziehungsweise die Karte kann in der Speichereinheit 19, 29 gespeichert sein. Insbesondere empfängt die Recheneinheit 18, 28 die Spurdaten 38 aus der jeweiligen Speichereinheit 19, 29. Alternativ oder zusätzlich kann die Recheneinheit 18, 28 die Karte von der Speichereinheit 19, 29 empfangen und die Spurdaten 38 aus der Karte extrahieren. Die Spurdaten 38 in der Speichereinheit 19, neunundzwanzigsten insbesondere tagesaktuell, Wochen aktuell, Monats aktuell oder Jahres aktuell und werden täglich, wöchentlich, monatlich oder jährlich aktualisiert. In der Speichereinheit 29 der zentralen Servereinrichtung 2 können die Spurdaten 38 besonders aktuell sein, der Aktualisierungsaufwand hierbei besonders gering ist. Beispielsweise ist dann eine zweistündliche, stündliche oder noch häufigere Aktualisierung möglich. Die Spurdaten 38 können in weiterer Ausgestaltung des vorliegenden Verfahrens von der Speichereinheit 29 der zentralen Servereinrichtung 2 auf die Speichereinheit 19 des Kraftfahrzeugs 1 übertragen beziehungsweise übermittelt werden. Insbesondere können die Spurdaten 38, welche in der Speichereinheit 19 des Kraftfahrzeugs 1 gespeichert sind, durch das empfangen von Aktualisierungen oder Spurdaten 38, insbesondere von der zentralen Servereinrichtung 2, aktualisiert werden. Die Spurdaten 38, welche in der Speichereinheit 19 des Kraftfahrzeugs 1 gespeichert sind, können entweder jederzeit über die drahtlose Datenverbindung 43, beispielsweise über das Handynetz, aktualisiert werden oder nur dann aktualisiert werden, wenn Zugriff auf eine stationäre Internetverbindung, beispielsweise einen DSL-Anschluss, über ein Funknetz, beispielsweise WLAN, besteht.

Die Referenztrajektorie 31 kann durch die Recheneinheit 18, 28, insbesondere anhand der Spurdaten 38, berechnet werden. Insbesondere ist die Recheneinheit 18, 19 dazu ausgebildet, die Referenztrajektorie auf der Grundlage der Spurdaten 38 zu bilden beziehungsweise zu berechnen. Die Referenztrajektorie 31 kann somit beispielsweise innerhalb des Kraftfahrzeugs 1 durch die Recheneinheit 18 oder außerhalb des Kraftfahrzeugs 1, nämlich innerhalb der Servereinrichtung 2, durch die Recheneinheit 28 gebildet werden. Die Referenztrajektorie 31 kann beispielsweise derart gebildet werden, dass sich das Kraftfahrzeug 1 stets in der Mitte der Fahrspur 36, 37 beziehungsweise mittig zwischen zwei Fahrbahnbegrenzungen 42 befindet. Durch die Referenztrajektorie 31 kann stets eine Geschwindigkeit vorgegeben sein, welche beispielsweise von einem Tempolimit, einem Kurvenradius und/oder einer Präferenzangabe eines Fahrzeuginsassen abhängig ist. Die Präferenzangabe kann beispielsweise eine komfortable oder eine sportliche Fahrweise vorgeben. Im Falle einer sportlichen Fahrweise können Querkräfte, welche aufgrund einer groben Fahrt auf den Fahrzeuginsassen wirken, auf einen ersten Wert begrenzt werden und bei komfortabler Fahrweise auf einen zweiten Wert begrenzt werden. Der erste Wert ist dann insbesondere größer als der zweite Wert, wobei sowohl der erste Wert als auch der zweite Wert fahrzeugabhängig, insbesondere abhängig von Modelldaten des Kraftfahrzeugs 1, sein können. Die Querkräfte können beispielsweise aus einem Kurvenradius einer Kurve und einer Geschwindigkeit beim Befahren der Kurve extrahiert werden. Die Modelldaten betreffen insbesondere eine Leistungsfähigkeit eines Antriebs des Kraftfahrzeugs 1, das Vorhandensein von Sonderausstattung, beispielsweise von Schalensitzen und einem Sportfahrwerk, eine Antriebsart, beispielsweise Heckantrieb, Frontantrieb oder Allradantrieb, oder die Leistungsfähigkeit von Bremsen betreffen. Alternativ oder zusätzlich kann die Leistungsfähigkeit weiterer Sensorik des Kraftfahrzeugs 1, beispielsweise der Erfassungseinrichtung 10, Einfluss auf das Berechnen der Referenztrajektorie 31 haben. Beispielsweise kann, wenn die Erfassungseinrichtung 10 eine Reichweite von 100 m aufweist, die Referenztrajektorie 31 eine höhere Fahrgeschwindigkeit des Kraftfahrzeugs 1 beschreiben, als wenn die Erfassungseinrichtung 10 nur eine Reichweite von 50 m aufweist.

Durch die Erfassungseinrichtung 10 des Kraftfahrzeugs 1 werden Umgebungsdaten 11 erfasst, welche eine Umgebung U des Kraftfahrzeugs 1 betreffen. Bei der Erfassungseinrichtung 10 kann es sich beispielsweise um eine Kamera, insbesondere Mono-Kamera oder Stereo-Kamera, um einen Radar-Sensor, einen Ultraschallsensor, einen Lidar-Sensor handeln. Insbesondere können mehrere unterschiedliche und/oder gleichartige Erfassungseinrichtungen 10 vorgesehen sein. Die Erfassungseinrichtung 10 kann eine begrenzte Reichweite 44, von beispielsweise 25 m, 50 m, 100 m, 150 m oder 200 m, aufweisen. Durch die Reichweite 44 ergibt sich ein Erfassungshorizont 45. Der Erfassungshorizont 45 kann ein Kreis um das Kraftfahrzeug 1 sein, wobei der Kreisradius des Kreises insbesondere der Reichweite 44 entspricht. Die Umgebungsdaten 11 welche mittels der Erfassungseinrichtung 10 erfasst werden, betreffen insbesondere die Umgebung U des Kraftfahrzeugs 1 innerhalb des Erfassungshorizonts 45. Beispielsweise können als Teil der Umgebungsdaten 11 Lage, Position und/oder Orientierung von Fahrbahnmarkierungen und/oder dynamischen fahrzeugexternen Objekten, beispielsweise einem weiteren Kraftfahrzeug 3, Fahrradfahrern und Fußgängern, und/oder stationären fahrzeugexternen Objekten, beispielsweise Fahrbahnbegrenzungen 42, Leitplanken und Randsteine, erfasst. Im Allgemeinen kann die Erfassungseinrichtung 10 eine Umgebungssituation sowie die Verkehrssituation als Teil der Umgebungsdaten 11 erfassen.

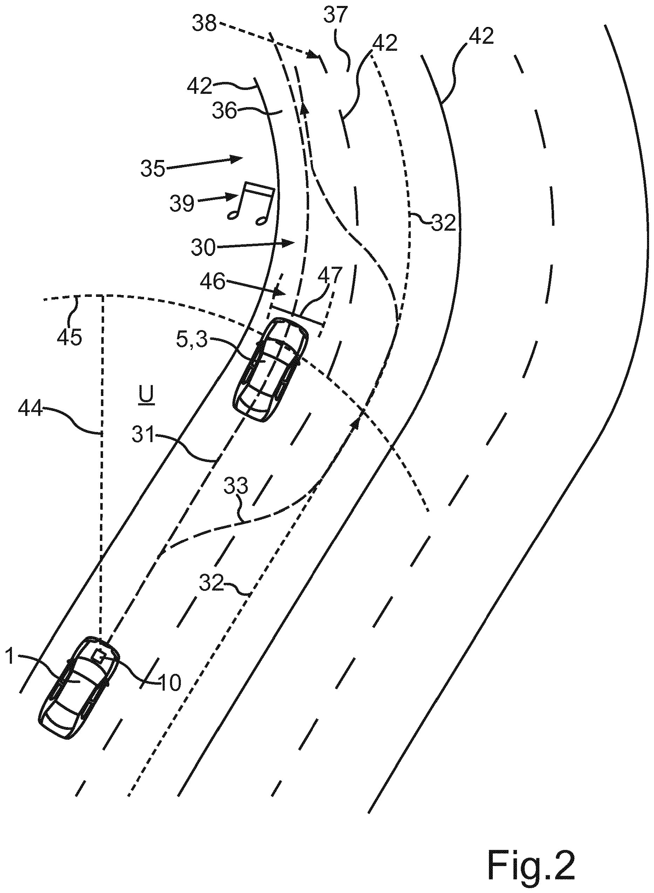

Anhand der Umgebungsdaten 11 kann die Befahrbarkeit der Referenztrajektorie 31 überprüft werden. Beispielsweise wird überprüft, ob sich ein fahrzeugexternes Objekt 5, vorliegend das weitere Kraftfahrzeug 3, auf der Referenztrajektorie 31 befindet. Das bedeutet insbesondere, dass sich das fahrzeugexterne Objekt 5 innerhalb eines Bereichs 46, dessen Breite 47 insbesondere einer Breite des Kraftfahrzeugs 1, vornehmlich zuzüglich eines Sicherheitsabstandes, entspricht, um die Referenztrajektorie 31 befindet. Insbesondere handelt es sich bei dem Bereichs 46 um den Bereich, der durch das Kraftfahrzeug 1 beim Folgen der Referenztrajektorie 31 überstrichen wird. In Fig. 2 ist der Bereich 46 der besseren Übersicht halber nur angedeutet. Überlappt das fahrzeugexterne Objekt 5 den Bereich 46 so kann die Befahrbarkeit der Referenztrajektorie 31 zumindest teilweise negiert werden.

Wird die Befahrbarkeit der Referenztrajektorie 31 zumindest teilweise beziehungsweise Bereichsweise negiert, so kann anhand der Umgebungsdaten 11 eine Fahrtrajektorie 33 erzeugt werden. Die Fahrttrajektorie 33 wird insbesondere durch Korrigieren der Referenztrajektorie 31, insbesondere in dem Bereich, für den die Befahrbarkeit der Referenztrajektorie 31 negiert wurde, erzeugt werden. Fig. 2 zeigt beispielhaft das fahrzeugexterne Objekt 5, ich ist die Referenztrajektorie 31 überlappt, weshalb die Befahrbarkeit der Referenztrajektorie 31 zumindest Bereichsweise negiert wird. Die Referenztrajektorie 31 folgt einer ersten Fahrspur 36. Anhand der Umgebungsdaten 11 wird vorliegend erkannt, dass eine zweite Fahrspur 37 frei ist. Insbesondere befinden sich auf der weiteren Fahrspur 37 keine weiteren Kraftfahrzeuge beziehungsweise keine weiteren fahrzeugexternen Objekte. Aus diesem Grund kann das fahrzeugexterne Objekt 5 gemäß der eingezeichneten Fahrttrajektorie 33 umfahren und/oder überholt werden. Die Fahrttrajektorie 33 wird insbesondere unter minimal mögliche Abweichung von der Referenztrajektorie 31 erzeugt. Das bedeutet, die Referenztrajektorie 31 wird nur bereichsweise anhand der Umgebungsdaten 11 korrigiert. In den Bereichen, in welchen die Befahrbarkeit der Referenztrajektorie 31 erkannt wird, entspricht die Fahrttrajektorie 33 vorzugsweise zumindest im Wesentlichen der Referenztrajektorie 31.

Der Bewegungsverlauf kann aufgrund des fahrzeugexternen Objekts 5 anders ausfallen, als durch die Referenztrajektorie 31 beschrieben. Insbesondere kann der durch die Referenztrajektorie 31 vorfestgelegte Bewegungsverlauf nachträglich anhand der Umgebungsdaten 11 angepasst werden.

Es kann vorgesehen sein, dass für die zu befahrende Route 30 mehrere alternative Referenztrajektorien durch das Kraftfahrzeug 1 beziehungsweise die Empfangseinrichtung 12 empfangen werden. Gemäß Fig. 2 werden die Referenztrajektorie 31 sowie eine weitere Referenztrajektorie 32 als alternative Referenztrajektorien durch das Kraftfahrzeug 1 beziehungsweise die Empfangseinrichtung 12 empfangen. Die mehreren alternativen Referenztrajektorien können durch die Recheneinheit 18, 28 erzeugt beziehungsweise berechnet werden und/oder an das Kraftfahrzeug 1 beziehungsweise die Empfangseinrichtung 12 übermittelt beziehungsweise gesendet werden. Vorliegend beschreibt die Referenztrajektorie 31 die Fahrt des Kraftfahrzeugs 1 auf der ersten Fahrspur 36. Die weitere Referenztrajektorie 32 beschreibt eine potentielle Fahrt des Kraftfahrzeugs 1 auf der zweiten Fahrspur 37. Zum Ausweichen des fahrzeugexternen Objekt beziehungsweise zum Korrigieren der Referenztrajektorie 31 kann vorgesehen sein, dass die Fahrttrajektorie 33 bereichsweise durch die weitere Referenztrajektorie 32 gebildet wird. Vorliegend verläuft die Fahrttrajektorie 33 zunächst gemäß der Referenztrajektorie 31, anschließend verläuft sie hin zur weiteren Referenztrajektorie 32 und folgt dieser bereichsweise. Zuletzt nähert sich die Fahrttrajektorie 33 wieder der Referenztrajektorie 31 an, um wieder deren Verlauf anzunehmen.

Im Allgemeinen kann eine der mehreren alternativen Referenztrajektorien anhand der Umgebungsdaten 11 ausgewählt werden. Vorliegend werden die jeweiligen der alternativen Referenztrajektorien anhand der Position des fahrzeugexternen Objekts 5 ausgewählt. Alternativ oder zusätzlich können mehrere alternative Referenztrajektorien anhand der Präferenzdaten des Fahrzeuginsassen und/oder der Modelldaten des Kraftfahrzeugs ausgewählt werden. Beispielsweise können sich die mehreren alternativen Referenztrajektorien alternativ oder zusätzlich in ihrer für das Kraftfahrzeug 1 festgelegten Fahrtgeschwindigkeit, maximalen Querkräften in Kurven, maximalen Beschleunigungswerten und/oder maximalen Verzögerungswerten unterscheiden. So kann anhand der Modelldaten beziehungsweise der Präferenzangabe eine komfortable Fahrweise oder eine sportliche Fahrweise ausgewählt werden.

Das Steuergerät 16 führt das Kraftfahrzeug 1 entlang der Fahrttrajektorie 33. Somit vollzieht das Kraftfahrzeug 1 eine autonome Fahrt entlang der Fahrttrajektorie 33. Insbesondere ist die Fahrt des Kraftfahrzeugs 1 durch die Fahrttrajektorie 33 vollumfänglich festgelegt, weshalb das Steuergerät insbesondere nur in der Fahrttrajektorie 33 enthaltene Befehle umsetzen beziehungsweise durch die Fahrttrajektorie 33 bereitgestellte Rahmenbedingungen einhalten muss. Das Führen umfasst die Längsführung und/oder Querführung des Kraftfahrzeugs 1. Das Steuergerät 16 kann Steuersignale aus der Fahrttrajektorie 33 extrahieren und/oder die Steuersignale an jeweilige Aktoren, beispielsweise der Bremsen, der Motorsteuerung und/oder der Lenkung senden beziehungsweise übermitteln. Die Steuersignale können beispielsweise Bremssignale und/oder Beschleunigungssignale und/oder Lenksignale umfassen.

Die Referenztrajektorie 31 kann durch Simulation einer Fahrt entlang der Straße 35 gebildet werden. Die Simulation der Fahrt entlang der Straße 35 kann beispielsweise anhand der Spurdaten 38 durchgeführt werden. Insbesondere können viele unterschiedliche Trajektorie mit unterschiedlichen Parametern, beispielsweise Geschwindigkeit und Querbeschleunigung, und/oder unterschiedlichen Verläufen simuliert werden. Eine Trajektorie aus der Vielzahl von Trajektorien kann nach einem vordefinierten Auswahlkriterium als die Referenztrajektorie 31 ausgewählt werden. Das vordefinierte Auswahlkriterium umfasst beispielsweise einen Maximalwert für die Querkräfte, die auf den Fahrzeuginsassen wirken, einen Minimalabstand von den Fahrbahnbegrenzungen 42 und/oder einen Maximalwert für die Geschwindigkeit, der insbesondere einem Tempolimit entspricht. Alternativ oder zusätzlich kann das vordefinierte Auswahlkriterium eine Maximierung der Kurvengeschwindigkeit des Kraftfahrzeugs 1 anstreben, insbesondere unter Wahrung der zuvor genannten Bedingungen.

Die Referenztrajektorie 31 an universell für mehrere Kraftfahrzeuge berechnet werden. Insbesondere bleibt die Referenztrajektorie 31 nachdem sie durch die Servereinrichtung 2 das Kraftfahrzeug 1 gesendet wurde in der Servereinrichtung 2, beispielsweise in der Speichereinheit 29, gespeichert. Wird die Straße 35 anschließend durch ein anderes Kraftfahrzeug befahren, so kann diesem die bereits berechnete Referenztrajektorie 31 übermittelt werden. Somit kann ein erneuter Berechnungsaufwand für die Referenztrajektorie 31 minimiert werden. Insbesondere können Kraftfahrzeuge in Fahrzeugklassen eingeteilt werden, wobei für jede Fahrzeugklasse eine Referenztrajektorie 31 oder mehrere alternative Referenztrajektorien gespeichert werden.

Die Referenztrajektorie 31 kann durch einen Testfahrer validiert werden. Der Testfahrer kann zum Testen der Straße 35 beziehungsweise der Referenztrajektorie 31 von der zentralen Servereinrichtung 2 auf die Route 30 geschickt werden. Alternativ oder zusätzlich kann ein beliebiges Kraftfahrzeug, welches die Route 30 befährt als Testfahrer dienen. Insbesondere gilt die Referenztrajektorie 31, nachdem sie durch den Testfahrer befahren wurde, als getestet. In diesem Fall ist die Referenztrajektorie 31 besonders sicher.

Die Referenztrajektorie 31 kann zumindest teilweise durch eine Abfolge von Koordinatenangaben beschrieben sein. Insbesondere empfängt das Kraftfahrzeug 1 beziehungsweise die Empfangseinrichtung 12 des Kraftfahrzeugs 1 die Referenztrajektorie 31 als eine Abfolge von Koordinatenangaben. Beispielsweise beziehen sich die Koordinatenangaben auf Positionen, welche jeweils einen Abstand von 5 cm, 10 cm, 20 cm, 30 cm, 50 cm, 70 cm, 100 cm, 150 cm oder 200 cm haben. Zwischenpunkte, welche nicht durch die Koordinatenangaben beschrieben sind, können durch Interpolation, beispielsweise durch Spline-Bildung, ermittelt werden. In diesem Fall kann die Referenztrajektorie 31 durch eine besonders geringe Datenmenge beschrieben sein.

Zum genauen Abfahren der Referenztrajektorie 31, wenn diese durch die Koordinatenangaben beschrieben wird, ist eine genaue Positionsbestimmung für das Kraftfahrzeug 1 nötig. Hierfür kann das Kraftfahrzeug 1 ein hochgenaues Lokalisierungsmodul 13, insbesondere ein RTK-Gerät, umfassen. Durch das hochgenaue Lokalisierungsmodul 13 kann eine Positionsermittlung des Kraftfahrzeugs 1 mit einer Genauigkeit von 1 cm, 2 cm, 5 cm, 10 cm, 20 cm oder 30 cm erfolgen. Um eine noch genauere Positionsbestimmung zu ermöglichen kann alternativ oder zusätzlich die Fahrt des Kraftfahrzeugs 1 ausgewertet werden. Beispielsweise werden Geschwindigkeit und Lenkwinkel des Kraftfahrzeugs 1 ausgewertet, um eine Positionsveränderung zu ermitteln.

Alternativ oder zusätzlich kann die Referenztrajektorie 31 zumindest teilweise durch Landschaftsmarken 39 beschrieben werden. Beispiele für Landschaftsmarken 39 sind Verkehrsschilder, Fahrbahnbegrenzungen 42, Bäume, Ampeln, Kreuzungen oder Kreisverkehr. Die Referenztrajektorie 31 kann dann zumindest teilweise in relativen Koordinaten relativ zu einer jeweiligen Landschaftsmarken 39 angegeben werden. Die jeweilige Landschaftsmarken 39 kann durch die Erfassungseinrichtung 10 des Kraftfahrzeugs als Teil der Umgebungsdaten 11 erfasst werden. Somit ist eine relative Positionsbestimmung des Kraftfahrzeugs 1 relativ zu der Landschaftsmarken 39 ermöglicht.

Gemäß Fig. 2 geht die zu befahrende Route 30, für welche die Referenztrajektorie 31 berechnet wird, über die Reichweite der Erfassungseinrichtung 10 hinaus. Insbesondere wird die Referenztrajektorie 31 auch für einen Bereich empfangen, der außerhalb des Erfassungshorizonts 45 liegt. Vorzugsweise wird durch die Recheneinheit 18, 28 die Referenztrajektorie zumindest teilweise für den Bereich außerhalb des Erfassungshorizonts 45 der Erfassungseinrichtung 10 berechnet. Somit ist ein besonders vorrauschauendes Planen der Trajektorie ermöglicht. Handelt es sich bei der Landschaftsmarkierung 39 um ein Ortsschild, ist beispielsweise ein frühzeitiges Ausrollen des Kraftfahrzeugs 1 durch die Referenztrajektorie 31 beziehungsweise die weitere Referenztrajektorie 32 vorgesehen. Ein derart vorausschauendes autonomes Steuern des Kraftfahrzeugs 1 beziehungsweise Planen einer Trajektorie ist allein anhand der Umgebungsdaten 11 nicht möglich.

Insgesamt zeigt das Beispiel, wie durch die Erfindung ein besonders vorrauschauendes Planen der Fahrttrajektorie 33 zu ermöglicht ist.

## Patentansprüche

1. Verfahren zum autonomen Führen eines Kraftfahrzeugs (1), mit den Schritten:
- Empfangen einer Referenztrajektorie (31) für eine durch das Kraftfahrzeug (1) zu befahrende Route (30) von einer zentralen Servereinrichtung (2) durch das Kraftfahrzeug (1), wobei durch die Referenztrajektorie (31) eine durchgängige Abfolge von Lenkmanövern und/oder Beschleunigungsmanövern und/oder Bremsmanövern festgelegt ist,
- Erfassen von Umgebungsdaten (11) aus einer Erfassungseinrichtung (10) des Kraftfahrzeugs (1), wobei als die Erfassungseinrichtung (10) eine Kamera, ein Radar-Sensor, ein Ultraschallsensor oder ein Lidar-Sensor herangezogen wird,
- Überprüfen einer Befahrbarkeit der Referenztrajektorie (31) anhand der Umgebungsdaten (11),
- Erzeugen einer Fahrttrajektorie (33) durch Korrigieren der Referenztrajektorie (31) anhand der Umgebungsdaten (11), und
- Autonomes Führen des Kraftfahrzeugs (1) entlang der Fahrttrajektorie (33) durch ein Steuergerät (16) des Kraftfahrzeugs (1), wobei
- als die Referenztrajektorie (31) eine solche verwendet wird, die von einer zentralen Servereinrichtung (2) unabhängig von den Umgebungsdaten (11) auf der Grundlage von Spurdaten (38) gebildet ist, wobei die Spurdaten (38) einen Fahrbahnverlauf einer Straße (35), entlang welcher die Route (30) führt, beschreiben.

2. Verfahren nach Anspruch 1,
**dadurch gekennzeichnet, dass**
die zu befahrende Route (30), für welche die Referenztrajektorie (31) berechnet wird, über eine Reichweite (44) der Erfassungseinrichtung (10) hinausgeht.

3. Verfahren nach einem der vorhergehenden Ansprüche,
**dadurch gekennzeichnet, dass**
die Referenztrajektorie (31) von der zentralen Servereinrichtung (2) berechnet und durch das Kraftfahrzeug (1) empfangen wird.

4. Verfahren nach einem der vorhergehenden Ansprüche,
**dadurch gekennzeichnet, dass**
die Referenztrajektorie (31) durch Simulation einer Fahrt entlang der Straße (35) gebildet wird.

5. Verfahren nach einem der vorhergehenden Ansprüche,
**dadurch gekennzeichnet, dass**
Referenztrajektorie (31) universell für mehrere Kraftfahrzeuge berechnet wird.

6. Verfahren nach einem der vorhergehenden Ansprüche,
**dadurch gekennzeichnet, dass**
für die zu befahrende Route (30) mehrere alternative Referenztrajektorien (31, 32) durch das Kraftfahrzeug (1) empfangen werden und eine davon anhand der Umgebungsdaten (11) und/oder Präferenzdaten eines Fahrzeuginsassen und/oder Modelldaten des Kraftfahrzeugs (1) ausgewählt wird.

7. Verfahren nach einem der vorhergehenden Ansprüche,
**dadurch gekennzeichnet, dass**
die Referenztrajektorie (31) zumindest teilweise durch eine Abfolge von Koordinatenangaben beschrieben wird.

8. Verfahren nach einem der vorhergehenden Ansprüche,
**dadurch gekennzeichnet, dass**
die Referenztrajektorie (31) zumindest teilweise durch Angaben zu Landschaftsmarken beschrieben wird, welche anhand der Umgebungsdaten (11) erfasst werden.

9. Verfahren nach einem der vorhergehenden Ansprüche,
**dadurch gekennzeichnet, dass**
als die Referenztrajektorie (31) eine solche verwendet wird, die durch einen Testfahrer validiert ist.

10. Kraftfahrzeug (1) mit einer Steuereinrichtung (4) zum autonomen Führen eines Kraftfahrzeugs (1), mit
- einer Empfangseinrichtung (12) zum Empfangen einer Referenztrajektorie (31) für eine durch das Kraftfahrzeug (1) zu befahrende Route (30) von einer zentralen Servereinrichtung (2), wobei durch die Referenztrajektorie (31) eine durchgängige Abfolge von Lenkmanövern und/oder Beschleunigungsmanövern und/oder Bremsmanövern festgelegt ist,
- einer Erfassungseinrichtung (10) zum Erfassen von Umgebungsdaten (11) einer Umgebung (U) des Kraftfahrzeugs (1), wobei die Erfassungseinrichtung (10) als Kamera, als Radar-Sensor, als Ultraschallsensor oder als Lidar-Sensor ausgeführt ist,
- einer Validierungseinrichtung (14) zum Überprüfen einer Befahrbarkeit der Referenztrajektorie (31) anhand der Umgebungsdaten (11) und zum Erzeugen einer Fahrttrajektorie (33) durch Korrigieren der Referenztrajektorie anhand der Umgebungsdaten, und
- einem Steuergerät (16) zum autonomen Führen des Kraftfahrzeugs (1) entlang der Fahrttrajektorie (33), wobei
- die Empfangseinrichtung (12) zum Empfang einer solchen Referenztrajektorie (31) ausgebildet ist, die von einer zentralen Servereinrichtung (2) unabhängig von den Umgebungsdaten (11) auf der Grundlage von Spurdaten (38) ausgebildet ist, wobei die Spurdaten (38) einen Fahrbahnverlauf einer Straße (35), entlang welcher die Route (30) führt, beschreiben.

## Claims

1. Method for autonomously driving a motor vehicle(1), comprising the steps of:
- receiving a reference trajectory (31) for a route (30) to be travelled along by the motor vehicle (1) from a central server apparatus (2) by the motor vehicle (1), wherein a continuous sequence of steering manoeuvres and/or acceleration manoeuvres and/or braking manoeuvres is defined by means of the reference trajectory (31),
- acquiring surroundings data (11) from a sensing apparatus (10) of the motor vehicle (1), wherein a camera, a radar sensor, an ultrasonic sensor or a lidar sensor are used as the sensing apparatus (10),
- checking the possibility of travelling along the reference trajectory (31) on the basis of the surroundings data (11),
- generating a travel trajectory (33) by correcting the reference trajectory (31) on the basis of the surroundings data (11), and
- autonomously driving the motor vehicle (1) along the travel trajectory (33) by means of a control device (16) of the motor vehicle (1), wherein
- the reference trajectory (31) used is one, which is formed by a central server apparatus (2) independently of the surroundings data (11) on the basis of lane data (38), wherein the lane data (38) describes a carriageway profile of a road (35), along which the route (30) leads.

2. Method according to claim 1,
**characterised in that**
the route (30) to be travelled along, for which the reference trajectory (31) is calculated, goes beyond a range (44) of the sensing apparatus (10).

3. Method according to any of the preceding claims,
**characterised in that**
the reference trajectory (31) is calculated by the central server apparatus (2) and received by the motor vehicle (1).

4. Method according to any of the preceding claims,
**characterised in that**
the reference trajectory (31) is formed by simulation of a journey along the road (35).

5. Method according to any of the preceding claims,
**characterised in that**
the reference trajectory (31) is calculated universally for several motor vehicles.

6. Method according to any of the preceding claims,
**characterised in that**
several alternative reference trajectories (31, 32) for the route (30) to be travelled along are received by the motor vehicle (1) and one of them is selected on the basis of the surroundings data (11) and/or preference data of a vehicle occupant and/or model data of the motor vehicle (1).

7. Method according to any of the preceding claims,
**characterised in that**
the reference trajectory (31) is at least partially described by a sequence of coordinates.

8. Method according to any of the preceding claims,
**characterised in that**
the reference trajectory (31) is at least partially described by information on landscape features, which are acquired on the basis of the surroundings data (11).

9. Method according to any of the preceding claims,
**characterised in that**
the reference trajectory (31) used is one, which is validated by a test driver.

10. Motor vehicle (1) having a control apparatus (4) for autonomously driving a motor vehicle (1), having
- a receiver apparatus (12) for receiving a reference trajectory (31) for a route (30) to be travelled along by the motor vehicle (1) from a central server apparatus (2), wherein a continuous sequence of steering manoeuvres and/or acceleration manoeuvres and/or braking manoeuvres is defined by means of the reference trajectory (31),
- a sensing apparatus (10) for acquiring surroundings data (11) for surroundings (U) of the motor vehicle (1), wherein the sensing apparatus (10) is implemented as a camera, a radar sensor, an ultrasonic sensor or a lidar sensor
- a validation apparatus (14) for checking the possibility of travelling along the reference trajectory (31) on the basis of the surroundings data (11) and for generating a travel trajectory (33) by correcting the reference trajectory on the basis of the surroundings data, and
- a control device (16) for autonomously driving the motor vehicle (1) along the travel trajectory (33), wherein
- the receiver apparatus (12) is designed for receiving a reference trajectory (31), which is one formed by a central server apparatus (2) independently of the surroundings data (11) on the basis of lane data (38), wherein the lane data (38) describes a carriageway profile of a road (35), along which the route (30) leads.

## Revendications

1. Procédé de conduite autonome d'un véhicule automobile (1) comprenant les étapes suivantes :
- réception d'une trajectoire de référence (31) pour un itinéraire (30) à emprunter par le véhicule automobile (1) par un dispositif de serveur central (2) dans le véhicule automobile (1), une séquence continue de manœuvres de direction et/ou de manœuvres d'accélération et/ou de manœuvres de freinage étant établie par la trajectoire de référence (31),
- acquisition de données d'environnement (11) à partir d'un dispositif d'acquisition (10) du véhicule automobile (1), dans lequel une caméra, un capteur radar, un capteur à ultrasons ou un capteur Lidar sont mis en œuvre en tant que dispositif d'acquisition (10),
- vérification d'une viabilité de la trajectoire de référence (31) au moyen des données d'environnement (11),
- génération d'une trajectoire de déplacement (33) par correction de la trajectoire de référence (31) au moyen des données d'environnement (11), et
- conduite autonome du véhicule automobile (1) le long de la trajectoire de conduite (33) par un dispositif de commande (16) du véhicule automobile (1), dans lequel
- la trajectoire de référence (31) utilisée est celle qui est formée par un dispositif de serveur central (2) indépendamment des données d'environnement (11) sur la base des données de voie (38), les données de voie (38) décrivant un profil de chaussée d'une route (35) suivie par l'itinéraire (30).

2. Procédé selon la revendication 1,
**caractérisé en ce que**
l'itinéraire (30) à emprunter, pour lequel est calculée la trajectoire de référence (31), s'étend au-delà d'une portée (44) du dispositif d'acquisition (10).

3. Procédé selon l'une des revendications précédentes,
**caractérisé en ce que**,
la trajectoire de référence (31) est calculée par le dispositif de serveur central (2) et est reçue par le véhicule automobile (1).

4. Procédé selon l'une des revendications précédentes,
**caractérisé en ce que**,
la trajectoire de référence (31) est formée par la simulation d'un parcours le long de la route (35).

5. Procédé selon l'une des revendications précédentes,
**caractérisé en ce que**,
la trajectoire de référence (31) est calculée de manière universelle pour plusieurs véhicules automobiles.

6. Procédé selon l'une des revendications précédentes,
**caractérisé en ce que**,
pour l'itinéraire (30) à emprunter, plusieurs trajectoires de référence alternatives (31, 32) sont reçues par le véhicule automobile (1) et l'une d'entre elles est sélectionnée au moyen des données d'environnement (11) et/ou des données de préférence d'un passager de véhicule et/ou des données de modèle du véhicule automobile (1).

7. Procédé selon l'une des revendications précédentes,
**caractérisé en ce que**,
la trajectoire de référence (31) est décrite au moins partiellement par une séquence de données de coordonnées.

8. Procédé selon l'une des revendications précédentes,
**caractérisé en ce que**,
la trajectoire de référence (31) est décrite au moins partiellement par des données sur des repères paysagers qui sont détectées au moyen des données d'environnement (11).

9. Procédé selon l'une des revendications précédentes,
**caractérisé en ce que**,
la trajectoire de référence (31) utilisée est celle qui est validée par un conducteur sur piste.

10. Véhicule automobile (1) équipé d'un dispositif de commande (4) pour la conduite autonome d'un véhicule automobile (1), comprenant
- un dispositif de réception (12) permettant la réception d'une trajectoire de référence (31) pour un itinéraire (30) à emprunter par le véhicule automobile (1) par un dispositif de serveur central (2), une séquence continue de manœuvres de direction et/ou de manœuvres d'accélération et/ou de manœuvres de freinage étant établie par la trajectoire de référence (31),
- un dispositif d'acquisition (10) pour l'acquisition de données d'environnement (11) d'un environnement (U) du véhicule automobile (1), le dispositif d'acquisition (10) étant configuré sous forme de caméra, de capteur radar, de capteur à ultrasons ou de capteur Lidar,
- un dispositif de validation (14) permettant la vérification d'une viabilité de la trajectoire de référence (31) au moyen des données d'environnement (11) et la génération d'une trajectoire de déplacement (33) par correction de la trajectoire de référence au moyen des données d'environnement, et
- un dispositif de commande (16) pour la conduite autonome du véhicule automobile (1) le long de la trajectoire de conduite (33), dans lequel
- le dispositif de réception (12) est configuré pour la réception d'une trajectoire de référence (31) qui est formée par un dispositif de serveur central (2) indépendamment des données d'environnement (11) sur la base des données de voie (38), les données de voie (38) décrivant un profil de chaussée d'une route (35) suivie par l'itinéraire (30).
